# DEMANDE DE BREVET EUROPEEN

(11) **EP 2 439 085 A1**
(43) Date de publication de la demande: **11.04.2012**
(21) Numéro de dépôt: 11183714.2
(22) Date de dépôt: 03.10.2011
(51) Int. Cl.: B60C 17/06, B60C 7/10, B60C 7/12, B60C 5/00

(54) **Insert élastomère de soutien d'un pneumatique et ensemble monté l'incorporant**

(30) Priorité: 07.10.2010 FR 1058162
(71) Demandeur: Hutchinson, 75008 Paris (FR)
(72) Inventeur: Seradarian, Pascal, Princeton Junction, NJ New Jersey 08550-4912 (US); Pelletier, Bruno, 95340 PERSAN (FR)
(74) Mandataire: Bolinches, Michel Jean-Marie

(57) **Abrégé**

La présente invention concerne un insert élastomère de soutien d'un pneumatique utilisable pour un chariot élévateur ou engin de manutention, et un ensemble monté incorporant cet insert notamment pour de tels véhicules.

Un insert (1) de soutien d'un pneumatique (10) selon l'invention, qui est destiné à soutenir sensiblement toute la face interne du pneumatique et présente une face radialement interne destinée à surmonter une jante de roue (20) recevant le pneumatique, présente au moins une cavité (4) adaptée pour être gonflée par une valve (26) de la roue indépendante de l'insert, par l'intermédiaire de moyens d'amenée (8) d'un gaz de gonflage débouchant sur ladite face radialement interne et dans ladite au moins une cavité et de moyens d'évacuation (9) du gaz hors de cette cavité, ladite au moins une cavité et ces moyens d'amenée et d'évacuation étant ménagés dans et/ou sur l'insert, ladite au moins une cavité gonflable étant formée par un volume interne dans le coeur de l'insert ou bien par une surface externe concave de l'insert.

## Description

La présente invention concerne un insert élastomère de soutien d'un pneumatique en particulier pour chariot élévateur ou engin de manutention, et un ensemble monté incorporant cet insert notamment pour de tels véhicules. L'invention s'applique d'une manière générale à un ensemble monté dans lequel cet insert soutient sensiblement toute la face interne du pneumatique, à la manière d'un coussin globalement torique.

De façon connue, l'utilisation de bandages pneumatiques (i.e. gonflés à l'air) dans des ensembles montés d'engins de manutentions ou de chariots élévateurs génère des instabilités en cas d'empilement vertical de ces véhicules, notamment.

Pour remédier à cet inconvénient, il est connu pour de telles applications d'équiper des bandages non pneumatiques (i.e. sans valve de gonflage sur la jante recevant ce bandage) d'un insert élastomère obtenu par la juxtaposition axiale de deux moitiés latérales sensiblement en forme de demi-tores, présentant chacune une multitude de canaux circonférentiels parallèles entre eux et régulièrement espacés, ces canaux étant étanches et remplis de gaz tel que de l'air à pression normale au moment de la fabrication de ces moitiés d'insert.

Parmi les autres types d'ensembles montés existants pour engins de manutention ou chariots élévateurs, on peut par exemple citer ceux utilisant un insert en un matériau cellulaire (e.g. en mousse de polyuréthanne) qui remplit l'intérieur du bandage, ce qui présente l'inconvénient de générer des problèmes d'homogénéité de remplissage et également d'échauffement indésirable du bandage en utilisation.

Le document US-1 401 507 présente un ensemble monté à jante de roue monobloc sur laquelle est monté un pneumatique et qui incorpore un insert élastomère torique à cavité circonférentielle gonflable par la valve de roue, cet insert étant monté sans prendre appui sur la jante de roue et étant traversé par le corps de cette valve pour le gonflage de cette cavité. Cette dernière présente une forme de « ∞ » en section axiale, la rendant assimilable à une chambre à air étanche formée de deux demi-chambres latérales de faible épaisseur latérale qui sont reliées entre elles par une portion de hauteur radiale réduite, ce qui implique en roulage à plat un affaissement radial de cet insert à chambre à air avec le pneumatique qu'il soutient, rendant ainsi cet ensemble monté inadapté pour équiper des engins de manutention ou des chariots élévateurs.

Le document DE-A1-27 48 886 présente un insert de soutien d'un pneumatique d'automobile constitué d'une ossature alvéolaire en nid-d'abeilles qui est dépourvue de cavité interne à l'insert et gonflable par la valve de roue, et qui ne convient pas pour équiper un chariot élévateur ou un engin de manutention.

Le document DE-U1-84 32 017 présente un insert de soutien de pneumatique ne convenant pas non plus pour équiper un tel chariot ou engin.

Un but de la présente invention est de proposer un insert élastomère de soutien d'un pneumatique utilisable pour équiper un chariot élévateur ou engin de manutention, l'insert étant destiné à soutenir sensiblement toute la face interne du pneumatique (i.e. la majeure partie de cette face interne) et présentant une face radialement interne destinée à surmonter une jante de roue recevant le pneumatique, qui permette de remédier aux inconvénients précités en permettant non seulement de stabiliser le véhicule en fonctionnement et de limiter l'échauffement du pneumatique, mais encore de minimiser sa déflexion en cas de crevaison pour ne pas immobiliser le véhicule et d'adapter sa raideur aux conditions d'utilisation, tout en utilisant un pneumatique sans chambre à air (i.e. sans chambre étanche) et une jante standard.

A cet effet, un insert selon l'invention est tel qu'il présente au moins une cavité adaptée pour être gonflée par une valve de roue indépendante de l'insert, par l'intermédiaire de moyens d'amenée d'un gaz de gonflage débouchant sur ladite face radialement interne et dans ladite au moins une cavité et de moyens d'évacuation du gaz hors de cette cavité, ladite au moins une cavité et ces moyens d'amenée et d'évacuation étant ménagés dans et/ou sur l'insert, ladite au moins une cavité qui est gonflable à une pression donnée par la valve étant formée par un volume interne dans le coeur de l'insert ou bien par une surface externe concave de l'insert.

Par « cavité », on entend donc de manière usuelle dans la présente description une partie creuse ou vide définissant un volume interne de l'insert (i.e. une cavité fermée confinée dans la masse de l'insert) ou bien une surface externe concave et donc ouverte de cet insert. Ainsi, un insert selon l'invention peut avoir sa ou ses cavités qui comprennent une ou des cavités internes à l'insert et/ou une ou des cavités externes à la surface de l'insert (ces cavités externes étant de préférence formées par au moins une paire de renfoncements latéraux, comme expliqué ci-après).

On notera que la ou chaque cavité gonflable et non étanche qui est associée à ces moyens d'amenée du gaz de gonflage (e.g. de l'air) sous une pression donnée, permet de piloter en cas de besoin la raideur de l'ensemble monté et de limiter l'échauffement du pneumatique par rapport à un ensemble monté à bandage non pneumatique (i.e. par définition sans gonflage de son espace interne).

On notera également qu'en cas de crevaison, la déflexion (i.e. la hauteur radiale d'écrasement ou d'affaissement sous charge) d'un ensemble monté équipé d'un insert selon l'invention reste avantageusement très faible, ce qui permet d'assurer de manière pérenne la stabilité du chariot élévateur ou de l'engin de manutention qui en est équipé.

Selon une autre caractéristique de l'invention, l'insert peut comprendre deux moitiés latérales annulaires de préférence moulées qui sont axialement juxtaposées l'une contre l'autre et qui comprennent chacune tout ou partie de ladite au moins une cavité, ces moitiés étant par exemple non solidaires l'une de l'autre et définissant ensemble ou avec le pneumatique lesdits moyens d'amenée et d'évacuation.

On notera qu'en variante ces moitiés pourraient être collées ou soudées l'une contre l'autre en plus d'être axialement juxtaposées.

Selon une autre caractéristique de l'invention, ladite face radialement interne peut présenter une forme sensiblement plate en section axiale, de sorte que l'insert soit apte à épouser un fond globalement plat de la jante.

Avantageusement, l'insert peut être exclusivement constitué d'un matériau élastomère compact, tel qu'un caoutchouc.

On notera que cette subdivision de l'insert en deux moitiés globalement toriques présente notamment comme avantage de réaliser aisément la ou chaque cavité via au moins une paire de demi-cavités concaves en regard l'une de l'autre dans ces moitiés respectives, et que le moulage de ces moitiés facilite le façonnage de ces demi-cavités identiques en vue de leur mise bord à bord.

Selon une autre caractéristique de l'invention, ladite au moins une cavité peut s'étendre dans la direction circonférentielle de l'insert, lesdits moyens d'amenée comprenant au moins un canal d'amenée présentant une paroi de canal qui est formée au moins en partie par l'insert soit à travers, soit autour de cet insert et qui est dans ce dernier cas délimitée extérieurement par la face interne du pneumatique.

Selon une autre caractéristique de l'invention, lesdits moyens d'amenée peuvent comprendre une pluralité de ces canaux d'amenée qui sont régulièrement espacés sur la circonférence de l'insert et qui communiquent entre eux par :
- au moins une gorge circonférentielle formée sur ladite face radialement interne de l'insert, et par
- une pluralité de gorges axiales également formées sur ladite face radialement interne qui sont respectivement associées auxdits canaux d'amenée et qui communiquent à la fois avec ces derniers et avec ladite au moins une gorge circonférentielle pour le gonflage de ladite au moins une cavité, l'une de ces gorges axiales étant adaptée pour recevoir la valve de roue à sa jonction avec l'une dite gorge circonférentielle destinée à être positionnée axialement au droit de la valve (i.e. à la jonction entre une gorge axiale et la ou l'une des gorge(s) circonférentielle(s)).

Selon une autre caractéristique de l'invention, lesdits moyens d'évacuation peuvent comprendre au moins un canal d'évacuation dudit gaz débouchant sur une face radialement externe de l'insert. Ledit au moins un canal d'évacuation peut par exemple prolonger ladite au moins une cavité à l'opposé dudit au moins un canal d'amenée.

Selon un premier mode de réalisation de l'invention, ladite au moins une cavité comprend un espace vide circonférentiel et continu qui est formé dans le coeur de l'insert et à partir duquel s'étend ledit au moins un canal d'amenée radialement à travers l'insert et jusqu'à ladite face radialement interne, ledit au moins un canal d'évacuation s'étendant radialement à travers l'insert dans l'axe dudit au moins un canal d'amenée, ladite paroi de canal étant constituée du matériau élastomère de l'insert et la ou chaque cavité ménageant une épaisseur d'élastomère adaptée (i.e. suffisante) autour de cette cavité pour éviter un affaissement de l'insert en utilisation.

Avantageusement, lesdites moitiés d'insert de préférence obtenues par moulage peuvent respectivement présenter au moins une paire de concavités identiques et tournées l'une vers l'autre qui forment par cette juxtaposition ladite au moins une cavité et ledit au moins un canal d'amenée et d'évacuation.

Selon un exemple de ce premier mode de l'invention, l'insert comprend une unique cavité constituée dudit espace vide circonférentiel qui est formée sensiblement à égale distance de ladite face radialement interne, d'une face radialement externe et de deux faces latérales de l'insert, cet espace vide présentant de préférence une largeur axiale maximale à proximité de cette face radialement externe.

On notera que l'insert pourrait en variante comprendre plusieurs cavités axialement juxtaposées et/ou radialement superposées au coeur de l'insert, avec par exemple l'une au moins de ces cavités qui serait constituée de deux demi-cavités ainsi juxtaposées via les moitiés d'insert.

Selon un second mode de réalisation de l'invention, ladite au moins une cavité comprend au moins une paire de renfoncements ou creux circonférentiels latéraux radialement vers l'intérieur desquels s'étend ledit au moins un canal d'amenée, axialement entre la jante et ladite face radialement interne puis de manière latérale radialement vers l'extérieur entre l'insert et le pneumatique jusqu'à ces renfoncements latéraux.

Conformément à ce second mode de l'invention, ledit au moins un canal d'évacuation peut comprendre au moins un canal tangentiel s'étendant entre l'insert et le pneumatique radialement vers l'extérieur de ces renfoncements latéraux et jusqu'à ladite face radialement externe, et/ou au moins un canal radial s'étendant de façon débouchante de ladite face radialement interne à ladite face radialement externe.

Selon un exemple de ce second mode de l'invention, l'insert comprend une seule paire de ces renfoncements circonférentiels qui sont symétriques l'un de l'autre par rapport au plan circonférentiel méridien de l'insert et qui sont formés sensiblement à égale distance de ladite face radialement interne et d'une face radialement externe de l'insert, chaque renfoncement présentant par exemple une section axiale en forme de « ⊃ » asymétrique.

On notera qu'un insert selon ce second mode pourrait en variante incorporer plusieurs paires de tels renfoncements latéraux radialement superposées.

Un ensemble monté selon l'invention, en particulier pour chariot élévateur ou engin de manutention, comprend une jante de roue munie d'une valve de gonflage, un pneumatique monté contre des rebords de la jante et un insert de soutien tel que défini ci-dessus monté à l'intérieur du pneumatique sur cette jante pour soutenir le pneumatique sensiblement sur toute sa face interne.

Selon une autre caractéristique de l'invention, la jante peut être à plusieurs blocs et recevoir en son fond globalement plat la face radialement interne de l'insert, lequel peut comprendre deux moitiés latérales annulaires et moulées qui sont axialement juxtaposées l'une contre l'autre et qui comprennent chacune tout ou partie de ladite au moins une cavité (ces moitiés étant par exemple non solidaires l'une de l'autre), ces moitiés définissant ensemble ou avec le pneumatique lesdits moyens d'amenée et d'évacuation.

Selon une autre caractéristique de l'invention, ladite au moins une cavité peut s'étendre dans la direction circonférentielle de l'insert, les moyens d'amenée et d'évacuation comprenant respectivement au moins un canal d'amenée et au moins un canal d'évacuation présentant chacun une paroi de canal au moins en partie formée par l'insert, la paroi étant formée :
- soit à travers l'insert dans ledit premier mode, avec ladite au moins une cavité qui comprend un espace vide circonférentiel et continu formé dans le coeur de l'insert et dans lequel débouche ledit au moins un canal d'amenée s'étendant radialement à travers l'insert à partir de sa face radialement interne, ledit au moins un canal d'évacuation s'étendant radialement à travers l'insert dans l'axe dudit canal d'amenée correspondant, ladite paroi de canal étant constituée du matériau élastomère de l'insert et ladite ou chaque cavité ménageant une épaisseur d'élastomère adaptée autour de cette cavité pour éviter un affaissement de l'insert,
- soit autour de l'insert dans ledit second mode, avec ladite paroi qui est délimitée extérieurement en partie par la face interne du pneumatique et avec ladite au moins une cavité qui comprend au moins une paire de renfoncements circonférentiels latéraux dans lesquels débouche ledit au moins un canal d'amenée, lequel s'étend d'abord axialement de part et d'autre de la valve entre la jante et ladite face radialement interne puis de chaque côté radialement vers l'extérieur entre l'insert et le pneumatique jusqu'à ces renfoncements latéraux, ledit au moins un canal d'évacuation s'étendant entre l'insert et le pneumatique radialement vers l'extérieur de ces renfoncements et jusqu'à une face radialement externe de l'insert,
avec dans ces deux cas ledit au moins un canal d'évacuation qui débouche sur ladite face radialement externe.

Selon une autre caractéristique de l'invention, lesdits moyens d'amenée peuvent comprendre une pluralité de ces canaux d'amenée qui sont régulièrement espacés sur la circonférence de l'insert et qui communiquent entre eux par au moins une gorge circonférentielle formée sur ladite face radialement interne en un emplacement positionné axialement au droit de la valve de roue, ladite face radialement interne présentant une pluralité de gorges axiales qui sont respectivement associées auxdits canaux d'amenée et qui communiquent à la fois avec ces derniers et avec ladite au moins une gorge circonférentielle pour le gonflage de ladite au moins une cavité, la valve de roue étant montée à la jonction entre l'une dite gorge circonférentielle et l'une desdites gorges axiales.

Selon un autre aspect de l'invention, l'ensemble monté peut être tel que, en utilisation, un matériau de remplissage cellulaire (e.g. une mousse de polyuréthanne) est inséré par la valve de roue en lieu et place du gaz de gonflage dans ledit au moins un canal d'amenée, dans ladite au moins une cavité et dans ledit au moins un canal d'évacuation, de sorte à permettre un roulage en mode dégradé en cas de crevaison du pneumatique via une perforation traversante réalisée dans ce dernier au droit de ladite face radialement externe de l'insert.

On notera que ladite au moins une cavité peut également permettre de rouler en cas de crevaison à l'état gonflé, i.e. sans avoir nécessairement à y remplacer ledit gaz par ce matériau de remplissage.

Selon encore un autre aspect de l'invention se rapportant à l'ensemble des modes et exemples de réalisation précités, le contour externe ou volume de l'insert est de préférence plus grand à l'état non contraint que celui de la face interne du pneumatique, concernant notamment la largeur axiale de l'insert qui est avantageusement prévue supérieure à celle du pneumatique au niveau de ses talons pour améliorer le blocage de ces talons contre les rebords de jante (effet « beadlock »), ce qui assure la mobilité du véhicule en cas de perte de pression dans l'ensemble monté. On notera toutefois que cette caractéristique de volume d'insert supérieur à celui du pneumatique notamment au niveau des talons de ce dernier est optionnelle, et que l'insert pourrait avoir un volume analogue à celui du pneumatique ne requérant pas sa compression contre le pneumatique lors de son montage.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en perspective et partiellement en écorché d'un insert de soutien à cavité gonflable selon le premier mode de l'invention, montrant l'une des moitiés d'insert en section axiale,
la figure 2 est une vue en section axiale suivant le plan ||-|| de la figure 1 de cet insert inséré à l'intérieur du pneumatique mais avant son montage sur une jante de roue,
la figure 3 est une vue en section axiale de l'insert de la figure 2 après montage sur une jante de roue,
la figure 4 est une vue en section axiale suivant le plan IV-IV de la figure 1 de ce même insert monté sur cette jante, montrant la valve de roue et les canaux d'amenée et d'évacuation de gaz qui communiquent avec la cavité de cet insert,
la figure 4a est une vue en section axiale analogue à celle de la figure 4 d'un insert selon une variante de l'invention qui est monté sur une autre jante à valve de roue excentrée, montrant la valve et les mêmes canaux d'amenée et d'évacuation de gaz qui communiquent autrement avec la cavité de cet insert,
la figure 5 est une vue en perspective et partiellement en écorché d'un insert de soutien à deux cavités gonflables selon le second mode de l'invention, montrant l'une des moitiés d'insert en section axiale,
la figure 6 est une vue en section axiale suivant le plan VI-VI de la figure 5 de cet insert inséré à l'intérieur du pneumatique mais avant son montage sur la jante de roue,
la figure 7 est une vue en section axiale de l'insert de la figure 6 après montage sur la jante de roue,
la figure 8 est une vue en section axiale suivant le plan VIII-VIII de la figure 5 de ce même insert monté sur cette jante, montrant la valve de roue et les canaux d'amenée et d'évacuation de gaz qui communiquent avec les deux cavités de cet insert,
la figure 9 est une vue en perspective et partiellement en écorché d'un insert de soutien à deux cavités gonflables selon le second mode de l'invention montrant l'une des moitiés d'insert en section axiale, conformément à une première variante de la figure 5, et
la figure 10 est une vue en perspective et partiellement en écorché d'un insert de soutien à deux cavités gonflables selon le second mode de l'invention montrant l'une des moitiés d'insert en section axiale, conformément à une seconde variante de la figure 5.

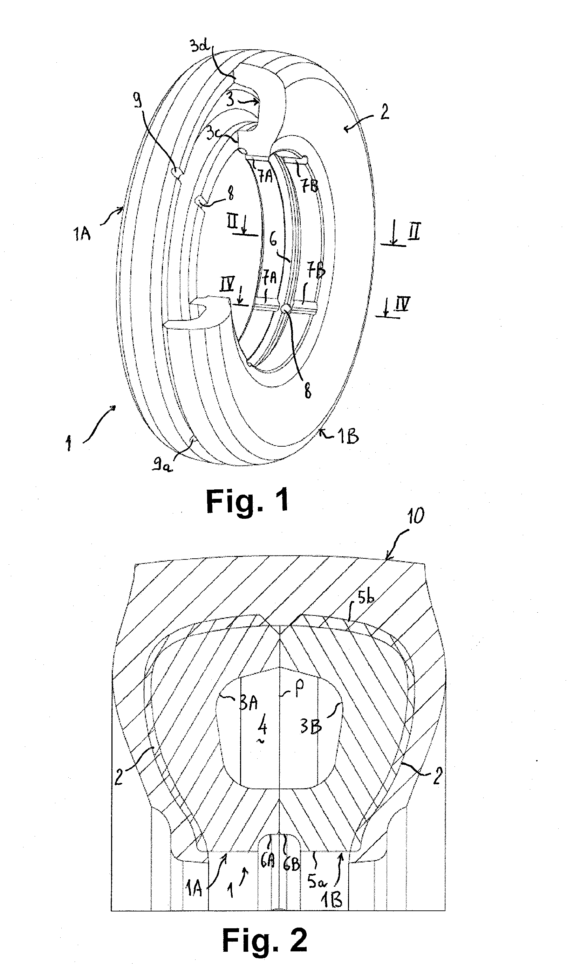

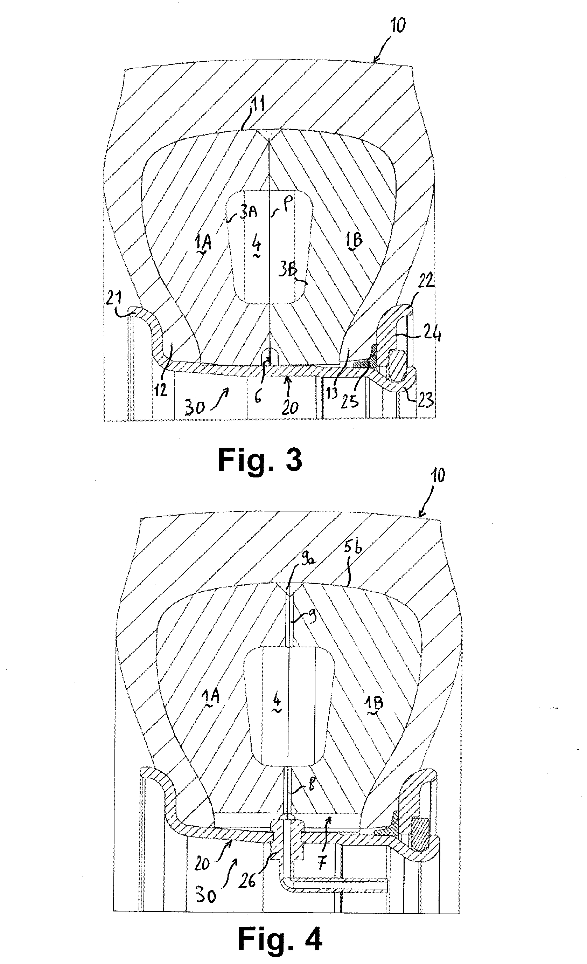

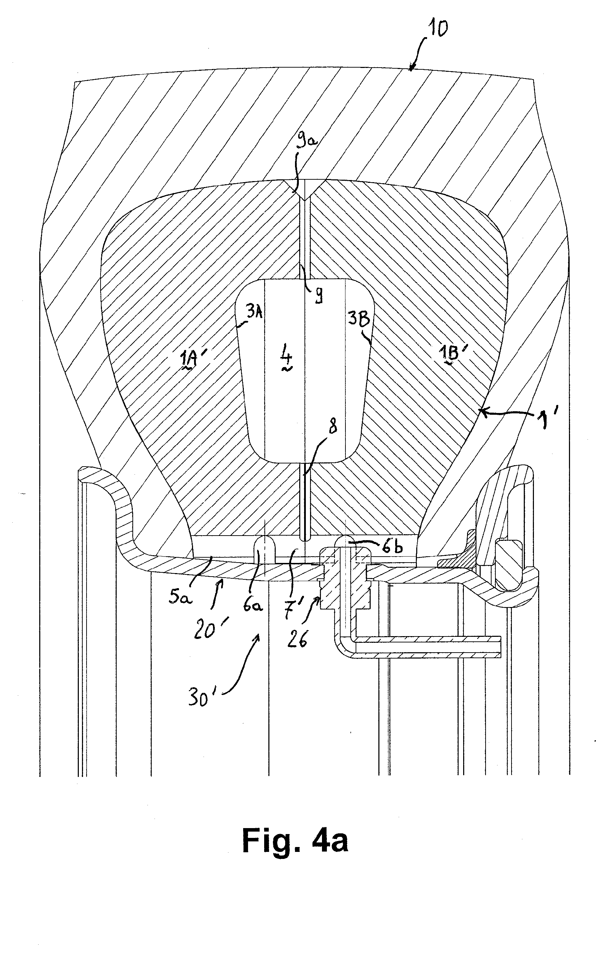

L'insert de soutien 1 des figures 1 à 4 est destiné à soutenir toute la face interne 11 d'un pneumatique 10 dont les talons 12 et 13 sont montés contre les rebords latéraux 21 et 22 d'une jante de roue 20 à deux blocs 23 et 24 (un joint d'étanchéité annulaire 25 de section en « L » est disposé à la jonction entre ces blocs 23 et 24) munie d'une valve de gonflage 26, pour former un ensemble monté 30 en particulier pour chariot élévateur ou engin de manutention tel que visible à la figure 4.

L'insert 1 globalement torique est constitué de deux moitiés latérales et annulaires d'insert 1A et 1 B sensiblement en forme de demi-tores élastomères (de préférence à base d'au moins un élastomère diénique ou non, comme par exemple du caoutchouc naturel) et avantageusement façonnées par moulage. Chaque moitié d'insert 1A, 1B présente une surface latérale convexe 2 qui est destinée à former l'une des deux surfaces latérales externes de l'insert 1 après juxtaposition axiale des deux moitiés 1A et 1 B, et une surface latérale creuse 3 en partie concave présentant une demi-cavité circonférentielle 3A, 3B continue qui est conçue pour former une cavité circonférentielle 4 gonflable au coeur de l'insert 1 après avoir été mise bord à bord avec la demi-cavité 3B, 3A de l'autre moitié 1 B, 1A.

Plus précisément, la surface latérale creuse 3 de chaque moitié d'insert 1A, 1 B présente un rebord radial circonférentiel radialement interne 3c et un rebord radial circonférentiel radialement externe 3d reliés entre eux par une zone centrale concave qui forme la demi-cavité 3A, 3B et qui présente une forme de gorge sensiblement en forme de « ⊃ » en section axiale dans l'exemple illustré (i.e. avec un fond de demi-cavité globalement radial relié par des portions arrondies à des bords globalement axiaux). La cavité 4 ainsi obtenue présente une section admettant comme plan de symétrie le plan circonférentiel médian P de l'insert et, dans cet exemple de réalisation, cette cavité 4 présente une forme polygonale à coins arrondis (globalement pentagonale au repos de l'insert dans l'exemple de la figure 2, et trapézoïdale en utilisation dans l'ensemble monté, voir figures 3 et 4), étant précisé que d'autres géométries sont envisageables.

Quant à la face radialement interne 5a de chaque moitié d'insert 1A, 1 B, elle s'étend dans la direction circonférentielle en étant plate en section axiale, à l'exception :
- de son bord interne adjacent au rebord radialement interne qui présente une demi-gorge circonférentielle 6A, 6B de sorte à former une gorge circonférentielle 6 continue par juxtaposition axiale avec la demi-gorge 6B, 6A en regard de l'autre moitié d'insert 1 B, 1A (voir figures 1 à 3), et
- de n demi-gorges axiales 7A, 7B qui sont formées à intervalles réguliers sur la circonférence de chaque moitié d'insert 1A, 1B en débouchant sur la demi-gorge circonférentielle 6A, 6B et qui forment respectivement n gorges axiales 7 par juxtaposition avec la demi-gorge 7B, 7A en regard de l'autre moitié d'insert 1 B, 1A (voir figures 1 et 4).

Comme visible à la figure 4, l'intersection entre chacune de ces gorges axiales 7 et la gorge circonférentielle 6 forme une rainure suffisamment profonde pour recevoir la valve 26 en vue du gonflage de la cavité 4, une fois l'insert 1 monté à l'intérieur du pneumatique 10 et sur la jante 20. A cet effet, les rebords radiaux interne 3c et externe 3d mis l'un contre l'autre des moitiés d'insert 1A et 1B respectives forment n canaux radiaux d'amenée 8 du gaz de gonflage (e.g. de l'air sous pression) amené par la valve 26 et n canaux radiaux coaxiaux d'évacuation 9 de ce gaz, chaque canal d'amenée 8 (de section circulaire) traversant la paroi radialement interne de l'insert 1 en débouchant à cette intersection et sur le bord axial radialement interne de la cavité 4, et chaque canal d'évacuation 9 (de section également circulaire) traversant la paroi radialement externe de l'insert 1 en débouchant sur le bord radialement externe de la cavité 4 et sur la face radialement externe 5b de l'insert 1 par une ouverture 9a formant un évent à bord tronconique divergent dans cet exemple de réalisation.

Comme visible aux figures 2 à 4, la cavité 4 est centrée au coeur de l'insert 1 de sorte à ménager autour une épaisseur d'élastomère suffisante afin d'éviter un affaissement de l'insert 1 en utilisation, et cette cavité 4 n'est pas étanche vis-à-vis du gaz de gonflage du fait que ce dernier en est évacué par chaque canal d'évacuation 9.

Après simple juxtaposition axiale des deux moitiés d'insert 1A et 1B, insertion de l'insert 1 ainsi obtenu à l'intérieur du pneumatique 10 et montage sur la jante 20 (par la compression de l'insert 1 visible à la figure 2 du fait de son volume au repos supérieur à celui du pneumatique 10, dans cet exemple de réalisation), on obtient un ensemble monté 30 selon ce premier mode dont la cavité 4 est gonflable grâce au canal d'amenée 8 disposé en aval de la valve 26 et aux autres canaux d'amenée 8 qui lui sont reliés via la gorge circonférentielle 6, mais n'est pas étanche du fait des canaux d'évacuation 9 qui en utilisation sont remplis du gaz de gonflage à la même pression que les canaux d'amenée 8 et la cavité 4 dans laquelle débouchent ces canaux 8 et 9. Comme illustré à la figure 4, on obtient ainsi dans ce premier mode un volume de gaz sous une pression donnée qui est réparti dans les n canaux d'amenée 8, les n canaux d'évacuation 9 et dans la cavité 4 et qui est essentiellement confiné à l'intérieur de l'insert 1, i.e. pas en contact avec la face interne 11 du pneumatique 10 à l'exception de l'évent 9a de chaque canal d'évacuation 9.

L'insert de soutien 1' de l'ensemble monté 30' de la figure 4a se différencie uniquement de l'insert 1 qui vient d'être décrit en relation avec les figures 1 à 4, en ce que ses deux moitiés 1A' et 1B' axialement juxtaposées présentent respectivement sur leur face radialement interne 5a deux gorges circonférentielles 6a et 6b axialement excentrées, en lieu et place des deux demi-gorges circonférentielles 6A et 6B précitées formant l'unique gorge circonférentielle 6 axialement centrale pour l'insert 1. Comme visible à la figure 4a, ces deux gorges circonférentielles 6a et 6b sont ici axialement espacées et l'une d'entre elles 6b (suivant le côté de montage de l'insert 1' sur la jante de roue 20', étant précisé qu'il pourrait s'agir de la gorge 6a vu la symétrie de l'insert 1' par rapport à son plan circonférentiel médian) est destinée à se trouver axialement au droit de la valve 26 de la roue 20', pour le gonflage de la cavité 4 par l'intermédiaire des gorges circonférentielles 6a, 6b et des gorges axiales 7' (lesquelles sont régulièrement espacées sur la circonférence de la face interne 5a à l'instar des gorges 7 et sont chacune obtenues par la juxtaposition axiale de deux demi-gorges respectivement formées sous les moitiés 1A' et 1B' comme pour 7A et 7B).

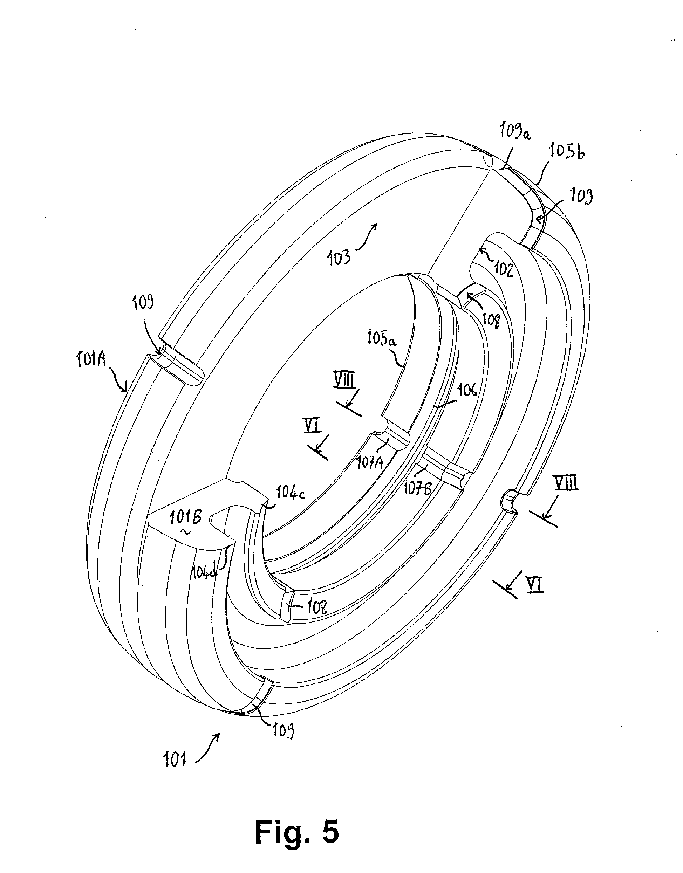

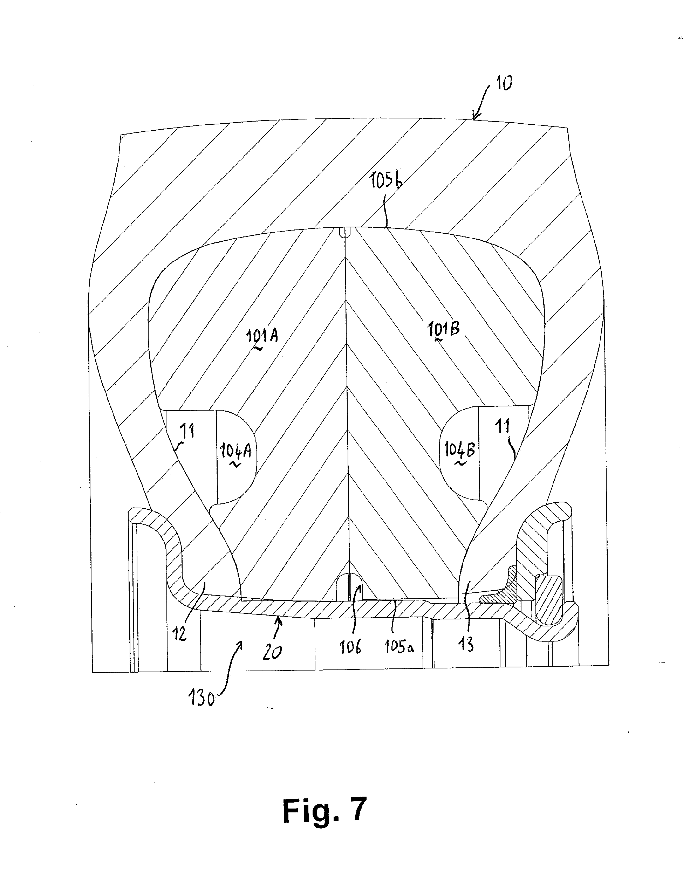

L'insert de soutien 101 selon le second mode des figures 5 à 8 se différencie uniquement de l'insert 1 précité en ce qu'il définit non pas une cavité interne intrinsèque mais deux cavités ou concavités latérales externes 104A et 104B en relation avec la face interne 11 du pneumatique 10, et également par la configuration de ses canaux d'amenée 108 et d'évacuation 109 du gaz de gonflage qui sont définis par l'ensemble de l'insert 101, de la jante 20 (inchangée par rapport au premier mode) et du pneumatique 10.

Chaque moitié d'insert 101A, 101B présente, d'une part, une surface latérale concave ou renfoncement 102 entre ses faces radialement interne 105a et externe 105b qui est destinée à former l'une des deux surfaces latérales externes 102 de l'insert 101 après juxtaposition axiale des deux moitiés 101A et 101B et, d'autre part, une surface latérale radiale 103 - surface méridienne interne pour l'insert 101 - qui est destinée à être posée à plat contre la face radiale 103 en regard de l'autre moitié d'insert 101B, 101A.

Plus précisément, la surface latérale 102 de chaque moitié d'insert 101A, 101B présente dans cet exemple de réalisation un rebord circonférentiel radialement interne 104c légèrement évasé (i.e. de largeur axiale croissante selon un profil légèrement concave) de manière à épouser le talon 12, 13 correspondant du pneumatique 10 qui se prolonge radialement vers l'extérieur par le renfoncement circonférentiel 104A, 104B de section axiale en « ⊃ » asymétrique à fond globalement radial relié par deux portions arrondies au bord axial du « ⊃ » le plus court qui fait suite au rebord interne 104c et au bord axial du « ⊃ » le plus long qui termine le renfoncement 104A, 104B et qui se prolonge par un rebord circonférentiel radialement externe 104d légèrement convexe définissant une largeur axiale maximale pour l'insert 101.

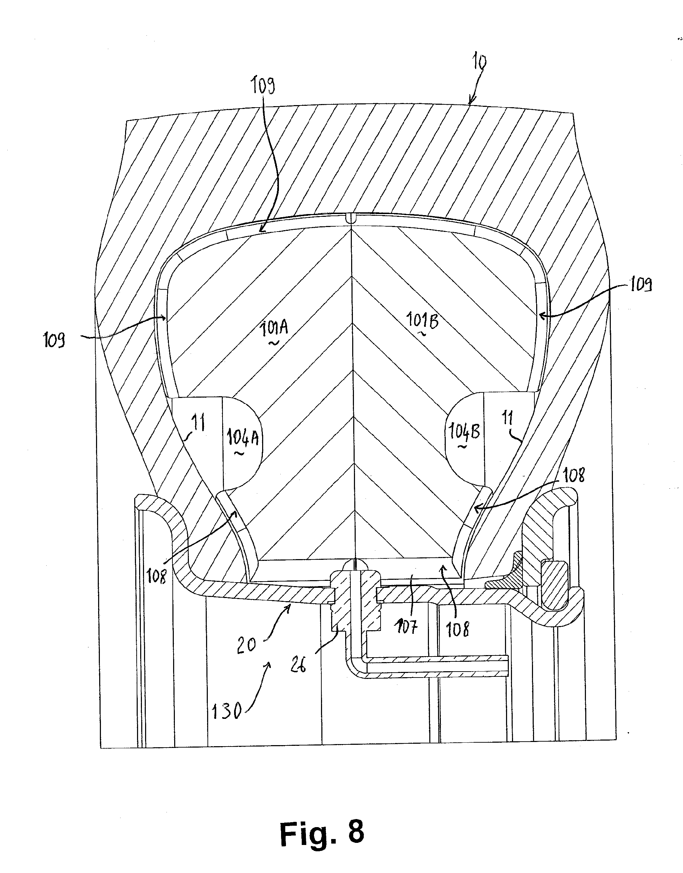

Quant à la face radialement interne 105a de chaque moitié d'insert 101A, 101 B, elle s'étend dans la direction circonférentielle en étant plate en section axiale, à l'exception, comme dans ledit premier mode :
- de son bord interne adjacent à la surface latérale radiale 103 qui présente une demi-gorge circonférentielle 106A, 106B formant une gorge circonférentielle 106 par juxtaposition avec celle de l'autre moitié 101 B, 101A (figures 5 à 7), et
- de n demi-gorges axiales 107A, 107B qui sont formées à intervalles réguliers sur la circonférence de chaque moitié d'insert 101A, 101B en débouchant sur la demi-gorge 106A, 106B et qui forment respectivement n gorges axiales 107 par juxtaposition avec la demi-gorge 107B, 107A de l'autre moitié 101B, 101A (voir figures 5 et 8).

Comme visible à la figure 8, l'intersection entre chaque gorge axiale 107 et la gorge circonférentielle 106 forme une rainure suffisamment profonde pour recevoir la valve 26 en vue du gonflage des deux renfoncements 104A et 104B, une fois l'insert 101 monté à l'intérieur du pneumatique 10 et sur la jante 20.

Comme illustré aux figures 5 et 8, l'insert 101 présente :
- n canaux d'amenée 108 qui sont chacun formés axialement entre la jante 20 et l'une des gorges axiales 107 de la face radialement interne 105a de l'insert 101, puis de manière latérale radialement vers l'extérieur jusqu'aux deux renfoncements 104A et 104B entre le rebord radialement interne 104c de l'insert 101 et le pneumatique 10, et
- n canaux tangentiels d'évacuation 109 qui sont chacun formés entre le rebord radialement externe 104d puis la face radialement interne 105b de l'insert 101, d'une part, et le pneumatique 10, d'autre part.

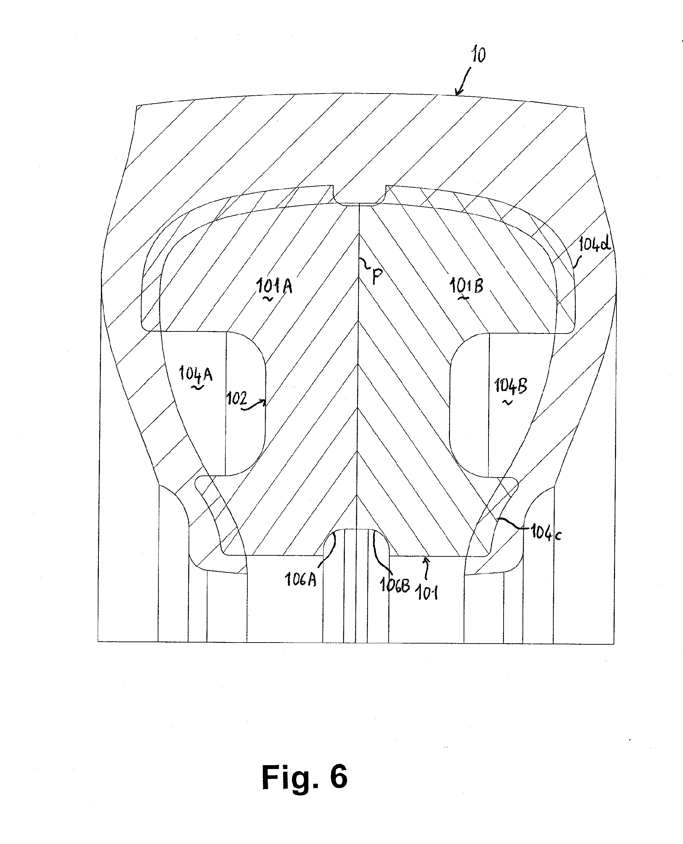

Après juxtaposition axiale des deux moitiés d'insert 101A et 101 B, insertion de l'insert 101 ainsi obtenu à l'intérieur du pneumatique 10 et montage sur la jante 20 (par la compression de l'insert 101 visible à la figure 6 du fait de son volume au repos supérieur à celui du pneumatique 10, dans cet exemple de réalisation), on obtient un ensemble monté 130 selon ce second mode dont les deux renfoncements 104A et 104B sont gonflables grâce au canal d'amenée 108 surmontant la valve 26 et aux autres canaux d'amenée 108 qui lui sont reliés via la gorge circonférentielle 106, mais ne sont pas étanches du fait des canaux d'évacuation 109 qui en utilisation sont remplis du gaz de gonflage à la même pression que les canaux d'amenée 108 et les renfoncements 104A et 104B. Comme illustré à la figure 8, on obtient ainsi un volume de gaz sous pression qui est réparti dans les n canaux d'amenée 108, les n canaux d'évacuation 109 et dans ces renfoncements 104A et 104B, et qui est en contact avec la face interne 11 du pneumatique 10. L'insert 101 est ainsi destiné à soutenir non pas la totalité mais la majeure partie de cette face interne 11, du fait qu'il présente les renfoncements 104A et 104B.

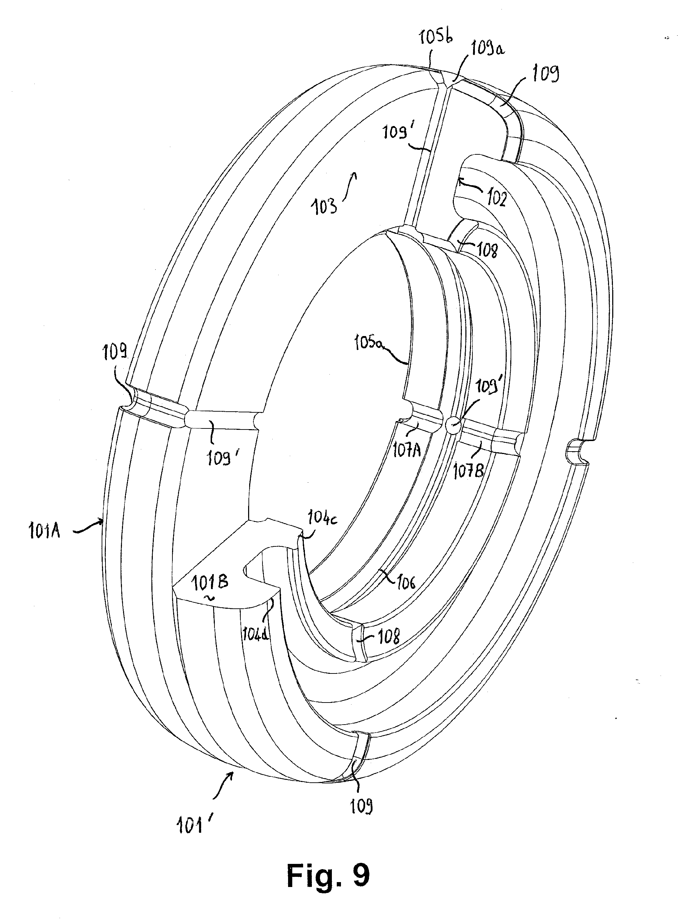

L'insert 101' relatif au second mode de l'invention selon la première variante de la figure 9 se différencie uniquement de l'insert 101 de la figure 5, en ce que ses moyens d'évacuation du gaz comprennent, outre les canaux tangentiels 109 précités, des canaux radiaux 109' qui s'étendent de façon débouchante de la face radialement interne 105a à la face radialement externe 105b de l'insert 101' en étant régulièrement espacés sur la circonférence de l'insert 101' à l'instar des canaux radiaux 8 et 9 de la figure 1 (i.e. à la jonction entre chaque gorge 107A, 107B et la gorge circonférentielle 106).

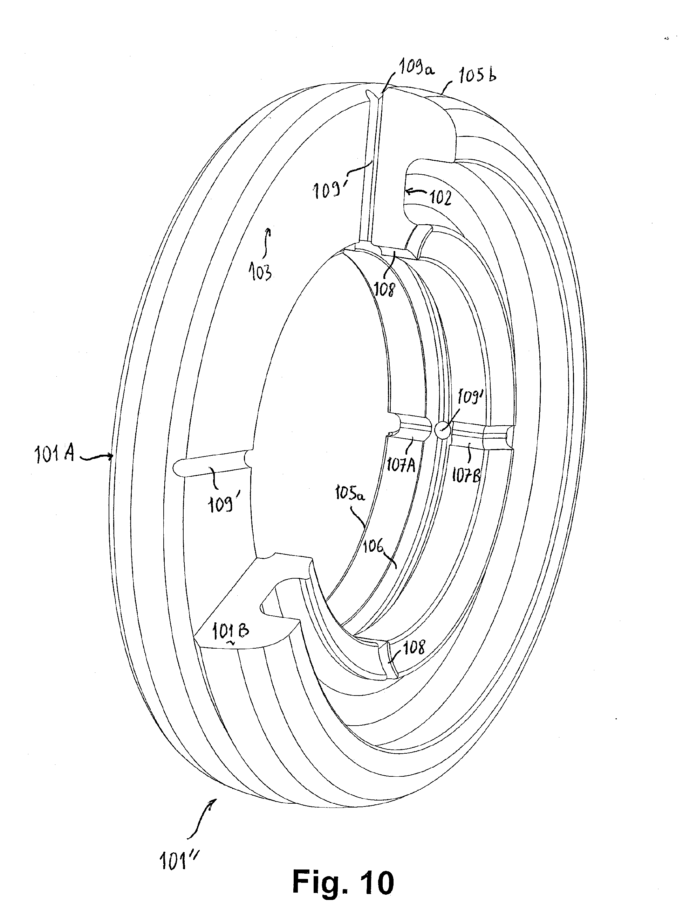

L'insert 101" relatif au second mode de l'invention selon la seconde variante de la figure 10 se différencie uniquement de l'insert 101' de la figure 9, en ce que ses moyens d'évacuation du gaz sont constitués, en lieu et place des canaux tangentiels 109 et radiaux 109' précités, uniquement de ces seuls canaux radiaux débouchants 109' régulièrement espacés.

Comme visible aux figures 9 et 10, les canaux d'amenée 108 sont inchangés par rapport à ceux de la figure 5 (seuls les canaux d'évacuation tangentiels 109 étant absents à la figure 10).

Comme indiqué précédemment en relation avec ces deux modes de réalisation de l'invention, on notera que ces configurations d'insert 1, 101, 101', 101" à cavité(s) 4, 104A, 104B gonflable(s) et non étanche(s) permettent non seulement d'adapter la raideur du pneumatique 10 aux conditions d'utilisation, de limiter son échauffement et de minimiser sa déflexion, mais encore de permettre un roulage en mode dégradé en cas de crevaison du pneumatique 10 optionnellement via une perforation traversante réalisée dans ce dernier au droit de la face radialement externe 5b, 105b de l'insert 1, 101, 101', 101" rempli en utilisation d'un matériau de remplissage cellulaire (e.g. une mousse de polyuréthanne) par la valve de roue 26 en lieu et place du gaz de gonflage (i.e. rempli dans la ou chaque cavité 4, 104A, 104B et dans les canaux d'amenée 8, 108 et d'évacuation 9, 109, 109'). En d'autres termes, la ou chaque cavité 4, 104A, 104B gonflée peut permettre de rouler en cas de crevaison sans avoir nécessairement à y remplacer le gaz de gonflage par ce matériau de remplissage cellulaire.

## Revendications

1. Insert élastomère (1, 1', 101, 101', 101") de soutien d'un pneumatique (10) utilisable pour équiper un chariot élévateur ou engin de manutention, l'insert étant destiné à soutenir sensiblement toute la face interne (11) du pneumatique et présentant une face radialement interne (5a, 105a) destinée à surmonter une jante de roue (20, 20') recevant le pneumatique, **caractérisé en ce que** l'insert présente au moins une cavité (4, 104A, 104B) adaptée pour être gonflée par une valve (26) de la roue indépendante de l'insert, par l'intermédiaire de moyens d'amenée (8, 108) d'un gaz de gonflage débouchant sur ladite face radialement interne et dans ladite au moins une cavité et de moyens d'évacuation (9, 109, 109') du gaz hors de cette cavité, ladite au moins une cavité et ces moyens d'amenée et d'évacuation étant ménagés dans et/ou sur l'insert, ladite au moins une cavité gonflable étant formée par un volume interne dans le coeur de l'insert ou bien par une surface externe concave de l'insert.

2. Insert (1, 1', 101, 101', 101") selon la revendication 1, **caractérisé en ce qu'**il comprend deux moitiés latérales annulaires (1A et 1 B, 1A' et 1B',101A et 101B) de préférence moulées qui sont axialement juxtaposées l'une contre l'autre et qui comprennent chacune tout ou partie de ladite au moins une cavité (4, 104A, 104B), ces moitiés étant par exemple non solidaires l'une de l'autre et définissant ensemble ou avec le pneumatique (10) lesdits moyens d'amenée (8, 108) et d'évacuation (9, 109, 109').

3. Insert (1, 1', 101, 101', 101" selon une des revendications précédentes, **caractérisé en ce que** ladite face radialement interne (5a, 105a) présente une forme sensiblement plate en section axiale, de sorte que l'insert soit apte à épouser un fond globalement plat de la jante (20, 20').

4. Insert (1, 1', 101, 101', 101") selon une des revendications précédentes, **caractérisé en ce qu'**il est exclusivement constitué d'un matériau élastomère compact, tel qu'un caoutchouc.

5. Insert (1, 1', 101, 101', 101") selon une des revendications précédentes, **caractérisé en ce que** ladite au moins une cavité (4, 104A, 104B) s'étend dans la direction circonférentielle de l'insert, lesdits moyens d'amenée comprenant au moins un canal d'amenée (8, 108) présentant une paroi de canal qui est formée au moins en partie par l'insert soit à travers, soit autour de cet insert et qui est dans ce dernier cas délimitée extérieurement par la face interne (11) du pneumatique (10).

6. Insert (1, 1', 101, 101', 101") selon la revendication 5, **caractérisé en ce que** lesdits moyens d'amenée comprennent une pluralité de ces canaux d'amenée (8, 108) qui sont régulièrement espacés sur la circonférence de l'insert et qui communiquent entre eux par :
- au moins une gorge circonférentielle (6, 6a, 6b,106) formée sur ladite face radialement interne (5a, 105a), et par
- une pluralité de gorges axiales (7, 7', 107) également formées sur ladite face radialement interne qui sont respectivement associées auxdits canaux d'amenée et qui communiquent à la fois avec ces derniers et avec ladite au moins une gorge circonférentielle pour le gonflage de ladite au moins une cavité (4, 104A, 104B), l'une de ces gorges axiales étant adaptée pour recevoir la valve de roue (26) à sa jonction avec l'une dite gorge circonférentielle (6, 6b, 106) destinée à être positionnée axialement au droit de cette valve.

7. Insert (1, 1', 101, 101', 101") selon la revendication 5 ou 6, **caractérisé en ce que** lesdits moyens d'évacuation comprennent au moins un canal d'évacuation (9, 109, 109') dudit gaz débouchant sur une face radialement externe (5b, 105b) de l'insert, et de préférence **caractérisé en ce que** ledit au moins un canal d'évacuation (9, 109) prolonge ladite au moins une cavité (4, 104A, 104B) à l'opposé dudit au moins un canal d'amenée (8, 108).

8. Insert (1, 1') selon la revendication 7, **caractérisé en ce que** ladite au moins une cavité (4) comprend un espace vide circonférentiel et continu qui est formé dans le coeur de l'insert et à partir duquel s'étend ledit au moins un canal d'amenée (8) radialement à travers l'insert et jusqu'à ladite face radialement interne (5a), ledit au moins un canal d'évacuation (9) s'étendant radialement à travers l'insert dans l'axe (P) dudit au moins un canal d'amenée, ladite paroi de chaque canal d'amenée et d'évacuation étant constituée du matériau élastomère de l'insert, et ladite ou chaque cavité ménageant une épaisseur d'élastomère autour de cette cavité adaptée pour éviter un affaissement de l'insert en utilisation.

9. Insert (1, 1') selon les revendications 2 et 8, **caractérisé en ce que** lesdites moitiés d'insert (1A et 1 B, 1A' et 1 B') présentent respectivement au moins une paire de concavités (3A et 3B) identiques et tournées l'une vers l'autre qui forment par cette juxtaposition ladite au moins une cavité (4) et ledit au moins un canal d'amenée (8) et d'évacuation (9).

10. Insert (1, 1') selon la revendication 8 ou 9, **caractérisé en ce qu'**il comprend une unique cavité (4) constituée dudit espace vide circonférentiel qui est formée sensiblement à égale distance de ladite face radialement interne (5a), d'une face radialement externe (5b) et de deux faces latérales (2) de l'insert, cet espace vide présentant de préférence une largeur axiale maximale à proximité de cette face radialement externe.

11. Insert (101, 101', 101") selon la revendication 7, **caractérisé en ce que** ladite au moins une cavité comprend au moins une paire de renfoncements circonférentiels latéraux (104A et 104B) radialement vers l'intérieur desquels s'étend ledit au moins un canal d'amenée (108), axialement entre la jante (20) et ladite face radialement interne (105a) puis de manière latérale radialement vers l'extérieur entre l'insert et le pneumatique (10) jusqu'à ces renfoncements latéraux, et de préférence **caractérisé en ce que** ledit au moins un canal d'évacuation (109, 109') comprend au moins un canal tangentiel (109) s'étendant entre l'insert et le pneumatique radialement vers l'extérieur de ces renfoncements latéraux (1 04A et 104B) et jusqu'à ladite face radialement externe (105b), et/ou au moins un canal radial (109') s'étendant de façon débouchante de ladite face radialement interne (105a) à ladite face radialement externe (105b).

12. Insert (101, 101', 101") selon la revendication 11, **caractérisé en ce qu'**il comprend une seule paire desdits renfoncements circonférentiels (104A et 104B) qui sont symétriques l'un de l'autre par rapport au plan circonférentiel méridien (P) de l'insert et qui sont sensiblement à égale distance de ladite face radialement interne (105a) et d'une face radialement externe (105b) de l'insert, chaque renfoncement présentant par exemple une section axiale en forme de « ⊃ » asymétrique.

13. Ensemble monté (30, 30', 130) en particulier pour chariot élévateur ou engin de manutention, comprenant une jante de roue (20, 20') munie d'une valve de gonflage (26), un pneumatique (10) monté contre des rebords (21 et 22) de la jante et un insert de soutien (1, 1', 101, 101', 101") monté à l'intérieur du pneumatique sur cette jante pour soutenir ce pneumatique sensiblement sur toute sa face interne (11), **caractérisé en ce que** l'insert est tel que défini à l'une des revendications précédentes, et de préférence **caractérisé en ce que** la jante est à plusieurs blocs et reçoit en son fond globalement plat la face radialement interne (5a, 105a) de l'insert, lequel comprend deux moitiés latérales annulaires et moulées (1A et 1 B, 1A' et 1 B', 101A et 101B) qui sont axialement juxtaposées l'une contre l'autre et qui comprennent chacune tout ou partie de ladite au moins une cavité (4, 104A, 104B), ces moitiés définissant ensemble ou avec le pneumatique (10) lesdits moyens d'amenée (8, 108) et d'évacuation (9, 109, 109').

14. Ensemble monté (30, 30', 130) selon la revendication 13, **caractérisé en ce que** ladite au moins une cavité (4, 104A, 104B) s'étend dans la direction circonférentielle de l'insert (1, 1', 101), lesdits moyens d'amenée et d'évacuation comprenant respectivement au moins un canal d'amenée (8, 108) et au moins un canal d'évacuation (9, 109) présentant chacun une paroi de canal qui est au moins en partie formée par l'insert, cette paroi étant formée :
- soit à travers l'insert (1, 1'), avec ladite au moins une cavité (4) qui comprend un espace vide circonférentiel et continu formé dans le coeur de l'insert et dans lequel débouche ledit au moins un canal d'amenée (8) s'étendant radialement à travers l'insert à partir de ladite face radialement interne (5a), ledit au moins un canal d'évacuation (9) s'étendant radialement à travers l'insert dans l'axe (P) dudit canal d'amenée correspondant, ladite paroi de canal étant constituée du matériau élastomère de l'insert et ladite ou chaque cavité ménageant une épaisseur d'élastomère adaptée autour de cette cavité pour éviter un affaissement de l'insert,
- soit autour de l'insert (101), avec ladite paroi qui est délimitée extérieurement en partie par la face interne (11) du pneumatique (10) et avec ladite au moins une cavité qui comprend au moins une paire de renfoncements circonférentiels latéraux (104A et 104B) dans lesquels débouche ledit au moins un canal d'amenée (108), lequel s'étend d'abord axialement de part et d'autre de ladite valve (26) entre la jante (20) et ladite face radialement interne (105a) puis de chaque côté radialement vers l'extérieur entre l'insert et le pneumatique jusqu'à ces renfoncements latéraux, ledit au moins un canal d'évacuation (109) s'étendant entre l'insert et le pneumatique radialement vers l'extérieur de ladite au moins une paire de renfoncements et jusqu'à une face radialement externe (105b) de l'insert, avec dans ces deux cas ledit au moins un canal d'évacuation (9, 109) qui débouche sur ladite face radialement externe.

15. Ensemble monté (30, 30', 130) selon la revendication 14, **caractérisé en ce que** lesdits moyens d'amenée comprennent une pluralité de ces canaux d'amenée (8, 108) qui sont régulièrement espacés sur la circonférence de l'insert (1, 1', 101, 101', 101") et qui communiquent entre eux par au moins une gorge circonférentielle (6, 6a, 6b, 106) formée sur ladite face radialement interne (5a, 105a) en un emplacement positionné axialement au droit de la valve de roue (26), ladite face radialement interne présentant une pluralité de gorges axiales (7, 7', 107) qui sont respectivement associées auxdits canaux d'amenée et qui communiquent à la fois avec ces derniers et avec ladite au moins une gorge circonférentielle pour le gonflage de ladite au moins une cavité (4, 104A, 104B), la valve de roue étant montée à la jonction entre l'une dite gorge circonférentielle (6, 6b, 106) et l'une desdites gorges axiales.

16. Ensemble monté (30, 30', 130) selon la revendication 14 ou 15, **caractérisé en ce qu'**un matériau de remplissage cellulaire est inséré par la valve de roue (26) en lieu et place dudit gaz dans ledit au moins un canal d'amenée (8, 108), dans ladite au moins une cavité (4, 104A, 104B) et dans ledit au moins un canal d'évacuation (9, 109, 109'), de sorte à permettre un roulage en mode dégradé en cas de crevaison du pneumatique (10) via une perforation traversante réalisée dans ce dernier au droit de ladite face radialement externe (5b, 105b) de l'insert (1, 1', 101, 101', 101 ").
